Europäisches Patentamt

European Patent Office

Office européen des brevets

(11) Publication number: **0 075 391**
**B1**

# (12) EUROPEAN PATENT SPECIFICATION

(45) Date of publication of patent specification: **29.05.85**

(51) Int. Cl.⁴: **B 60 T 8/26**

(21) Application number: **82304343.5**

(22) Date of filing: **18.08.82**

(54) Vehicle brake pressure proportioning valves.

(30) Priority: **22.09.81 GB 8128597**

(43) Date of publication of application:
**30.03.83 Bulletin 83/13**

(45) Publication of the grant of the patent:
**29.05.85 Bulletin 85/22**

(84) Designated Contracting States:
**DE FR IT**

(56) References cited:
**DE-A-2 600 288**
**GB-A-1 488 353**
**GB-A-2 065 806**
**GB-A-2 069 643**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Young, Alastair John**
**39 Roundshill Kenilworth**
**Warwickshire, CV8 1DW (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

The invention relates to vehicle brake pressure proportioning valves.

GB.A 2 069 643 shows a vehicle brake pressure proportioning valve comprising a housing having an inlet port for connection to a driver-controlled source of fluid pressure and an outlet port for connection to rear brakes of the vehicle, a stepped proportioning valve plunger slidable in a stepped bore in the housing and having one, relatively small, piston area subject to inlet pressure from the inlet port and another, relatively large, piston area subject to brake pressure at the outlet port, a loading spring which applies a spring biassing load to the proportioning valve plunger in a direction opposing movement of the plunger under the action of brake pressure at the outlet port and metering valve means associated with the proportioning valve plunger for controlling flow between the inlet port and the outlet port, movement of the proportioning valve plunger against the spring biassing load changing the metering valve means from an open state permitting flow between the inlet port and the outlet port to a closed state preventing flow from the inlet port to the outlet port, the metering valve means acting as a non-return valve to allow flow from the outlet port to the inlet port, a control mass operative to control flow through a control port between the inlet port and a control chamber by seating on an annular valve seat at one end of the control port, a control plunger movable against a predetermined resilient biassing load by pressure in the control chamber acting on a piston area of the control plunger, and a projection on the control plunger which extends through the control port and the annular valve seat, the control mass having a normal, rest, position in which the control mass is prevented from seating on the annular valve seat by the projection, a seated position permitted by the control plunger having been moved against the resilient biassing load by pressure in the control chamber to allow the control mass to be moved under gravity and seat on the annular valve seat and a disabled position in which the control mass has been moved away from the annular valve by vehicle deceleration. Such a valve will be referred to as "a proportioning valve of the kind described".

In the proportioning valve of the kind described which is shown in the prior art reference, the control plunger is in a separate bore to the stepped bore in which the proportioning valve is slidable and a separate spring provides the resilient biassing load on the control plunger. Such an arrangement is disadvantageous in that separate springs are required, which need individual selection and control of spring rate and preload during manufacture. Also, at least one additional fluid seal is required, adding to hysteresis in the characteristics of the valve caused by seal friction and increasing the chances of a seal failure. All these disadvantages are additional to the increased cost of the valve due to the multiplicity of components.

It is therefore an object of the invention to provide a vehicle brake pressure proportioning valve of the kind described which requires only one biassing spring and the number of other components is minimised. This object can be achieved in a vehicle brake pressure proportioning valve formed in accordance with appended Claim 1.

The invention will now be described by way of example and with reference to the accompanying drawings, of which:—

Fig. 1 is a cross-section through one embodiment of a vehicle brake pressure proportioning valve according to the invention;

Fig. 2 is a graph of Brake Pressure against Inlet Pressure (Master Cylinder Pressure) illustrating the characteristics of the valve shown in Fig. 1;

Fig. 3 is a scrap-section showing a modification to the proportioning valve shown in Fig. 1;

Fig. 4 is a graph of Brake Pressure against Inlet Pressure (Master Cylinder Pressure) illustrating the characteristics of the modified valve described with reference to Fig. 3; and

Fig. 5 is a scrap-section showing a further modification to the valve shown in Fig. 1.

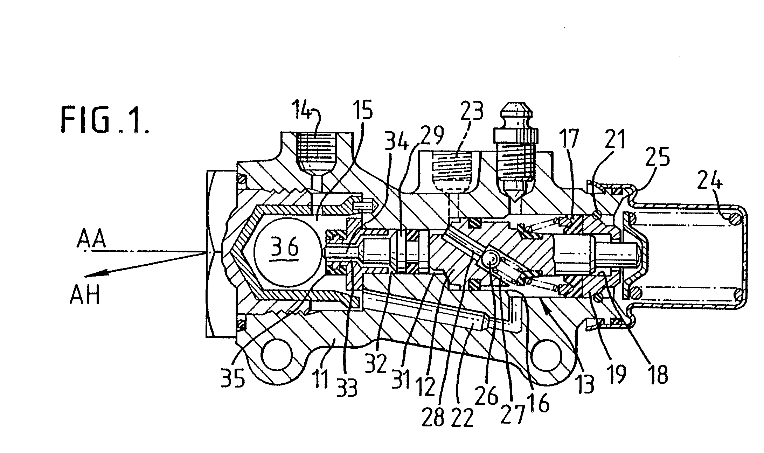

Referring to Fig. 1, the valve shown has a housing 11 having a stepped proportioning valve plunger 12 slidable in a stepped bore 13 in the housing. An inlet port 14 is connected to a driver-controlled source of pressure, such as a hydraulic master cylinder, and opens into an end chamber 15. An annular piston area is defined by plunger 12 between a large diameter portion which is slidable in a large diameter bore portion 16 and a smaller diameter portion slidable in an annular cup seal 17 and a small diameter bore portion 18 in a collar 19 which is secured in the stepped bore 13 by a circlip 21 and is thus effectively part of the housing 11. The end chamber 15 is connected to the annular chamber between bore portion 16 and seal 17 by a passage 22.

An outlet port 23 is connected to rear brakes of the vehicle and opens into the larger diameter bore portion 16 on the opposite side to the annular piston area so that brake pressure acts on a piston area which is relatively larger than the aforesaid annular piston area. A loading spring 24 applies a spring biassing load to plunger 12 in a direction opposing movement of plunger 12 under the action of brake pressure at outlet port 23 and is retained by a pressed cap 25 secured in a manner described in GB.1 488 353.

The proportioning valve plunger 12 incorporates metering valve means in the form of a spring loaded ball 26 which seats on a step in a passage 27 formed diagonally in plunger 12. The metering valve means co-operates with the housing 11 by the action of a fluted pin 28 which is slidable in the diagonal passage 27, one end of the pin abutting a step in the bore 13 and the other end abutting the ball 26.

A control plunger 29 is slidable in a further bore portion 31 of the stepped bore and lies adjacent to the proportioning valve plunger 12. The opposite end of the control plunger 29 has a piston area open to a control chamber 32 connected to the end chamber 15 by a control port 33. A projection 34 on the control plunger 29 extends through the control port 33 and a resilient valve seat 35 at the end of the control port which opens into the end chamber 15. As the components are shown in Fig. 1, the projection 34 prevents a control mass in the form of a ball 36 from seating on the valve seat 35, this being the normal, rest position of the ball. The control ball 36 can roll a limited distance in the end chamber 15.

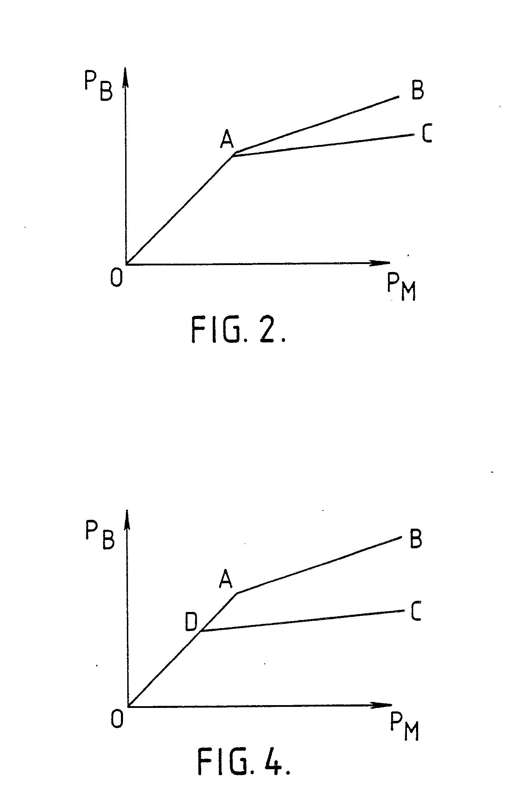

The valve is mounted on the vehicle so that the plunger axis AA is inclined relative to the direction of travel AH, In use with low master cylinder pressures, pressure at the inlet port 14 is transmitted through the end chamber 15, passage 22 and the diagonal passage 27 to the outlet port 23 without significant reduction. This line is O—A on Fig. 2.

If the vehicle has a high gross weight then the metering valve means becomes effective before the deceleration is of such magnitude that the control ball 36 rolls away from its abutment with the projection 34. The metering valve means becomes effective when the inlet pressure reaches a predetermined magnitude at which the pressure loading on the proportioning valve plunger 12 overcomes the biassing preload of the loading spring 24 and moves plunger 12 against the preload. The net piston area of plunger 12 is equivalent to the stem portion which passes through seal 17 and bore portion 18. In such circumstances the control plunger 29 moves with the proportioning valve plunger 12 and allows the control ball 36 to move under gravity into a seated position in which it is seated on the valve seat 35, blocking the control port 33.

The valve is arranged so that when both plungers 12 and 29 move together against the loading spring 24, then the control ball 36 can seat before the metering valve ball 26. When the metering valve ball seats it blocks communication through the diagonal passage 27 from the inlet port 14 to the outlet port 23 so that a further increase in inlet pressure acts on the annular piston area of plunger 12 to move the plunger in the direction of the end chamber 15 to unseat the metering valve ball 26. The proportioning valve plunger 12 continues to shuttle to and fro in known manner, seating and unseating the metering valve ball 26 and maintaining the force/pressure balance on plunger 12.

As inlet pressure increases, the control ball 36 remains seated on seat 35 by the pressure difference between the inlet pressure and the outlet pressure acting on the control plunger 29. The control plunger 29 is thus hydraulically locked in the position wherein the projection 34 just abuts the control ball 36. Under these conditions the control plunger 29 becomes spaced from the proportioning valve plunger 12 and brake pressure increases with inlet pressure at a reduced rate. This is illustrated in Fig. 2 which shows brake pressure $P_B$ against inlet pressure $P_M$. The line O—A shows operation before the metering valve means becomes operative, after which the line A—B shows brake pressure increasing at the reduced rate, the slope of the line being determined by the areas defined by bore portions 16 and 18.

If the gross vehicle weight is low, then the control ball 36 will move away from the projection 34 at a predetermined vehicle deceleration which is attained before the metering valve means becomes effective. This is its disabled position and it has no further effect on the operation of the proportioning valve. With increasing inlet pressure, the control port 33 then remains open. The proportioning valve plunger and metering valve means continue to function as described above for the high load condition, but pressure in the control chamber 32 causes the control plunger 29 to exert a load on the proportioning valve plunger 12 in the direction opposing the biassing load of spring 24. This alters the rate at which brake pressure increases with inlet pressure but not the predetermined pressure at which metering starts. Hence the characteristic is illustrated by line A—C in Fig. 2.

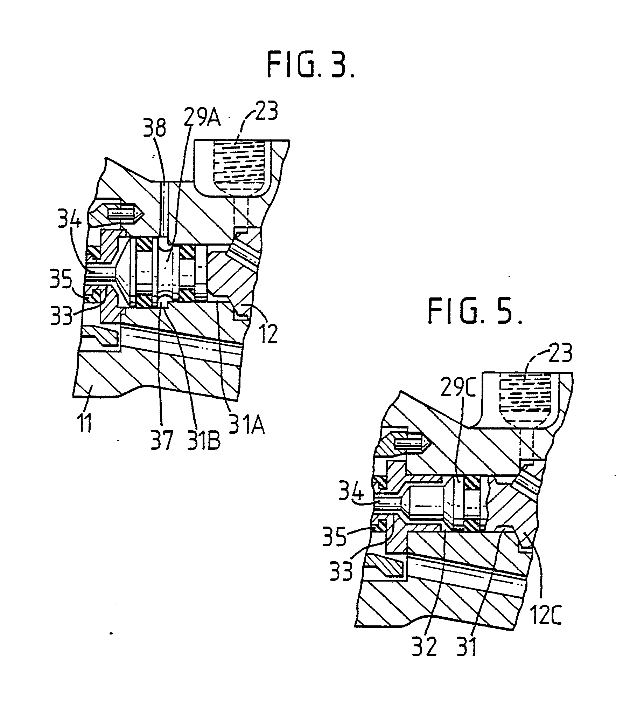

In the modification shown in Fig. 3 the control plunger 29A is stepped and has one land slidable in a relatively small diameter bore portion 31A and another land slidable in a relatively large diameter bore portion 31B. An annular chamber 37 between the lands is vented to atmosphere through a vent port 38.

In operation with a high gross vehicle weight the valve functions substantially similarly to the embodiment in Fig. 1 described above, the characteristic being the line O—A—B as shown in Fig. 4 (in which $P_B$ again represents brake pressure and $P_M$ represents master cylinder pressure). With a low gross vehicle weight, the valve operates as described above for the Fig. 1 embodiment, except that the control plunger 29A exerts a significant load on the proportioning valve plunger 12 even before the plungers move to allow the metering valve to become operative and inlet pressure increases over brake pressure. This is because of the difference in piston areas presented by the two end faces of the control plunger 29A. This means that the proportioning valve plunger moves against the loading spring 24 at a lower predetermined inlet pressure, i.e. point D in Fig. 4, so that the line D—C is followed during metering.

In the modification shown in Fig. 5, the control plunger 29C is integral with the metering valve plunger 12C. When the vehicle has a low gross weight, the valve works exactly as described above for the Fig. 1 embodiment. However, when the vehicle has a high gross weight, the control ball 36 blocks the control port 33 as described in Fig. 1 but the control plunger 29C continues to move with the proportioning valve plunger 12C. This tends to cavitate the fluid in the control chamber 32. If the cross-sectional area of bore portion 31 is the same as or only slightly below the cross-sectional area of bore portion 18 the combined plunger 12C and 29C remains in the position wherein the projection 34 is just abutting the control ball 36 and no further movement of the plungers 12C and 29C occurs for all normal inlet pressures. Thus, the metering valve does not come into operation and the proportioning valve continues to provide the same brake pressure at port 23 as inlet pressure at port 14.

If the cross-sectional area of bore portion 32 is significantly below that of bore portion 18 then the plungers move against the loading spring 24 by at a higher predetermined inlet pressure, since the force acting on the plungers (due to the pressure in the control chamber 32) is significantly less than in the embodiment discussed in the immediately preceding paragraph. The rate of increase of brake pressure with increasing inlet pressure is also changed so that the characteristics are similar to those shown in Fig. 4 for the Fig. 3 embodiment.

In another modification (not shown) the plungers 12C and 29C are integral (as in Fig. 5) and a passage connects the control chamber 32 with the outlet port 23. This passage contains a non-return valve which permits flow from the outlet port 23 to the control chamber 32 only and thus prevents the pressure in the control chamber 32 falling significantly below the brake pressure. Operation of this valve is the same as the valve shown in Fig. 1.

In a further modification (not shown) the plungers 12C and 29C are again integral (as in Fig. 5) and a passage connects the control port with a reservoir at atmospheric pressure; for example the master cylinder supply tank. This passage contains a non-return valve which permits flow from the reservoir to the control chamber 32 only and thus prevents the pressure in the control chamber 32 falling significantly below atmospheric pressure. Operation of this valve is the same as the valve shown in Fig. 5, the non-return valve preventing cavitation and possible problems due to vapour bubbles.

By the use of a single spring 24 to provide the biassing load on the proportioning valve plunger 12 and the control plunger 29 only one selection of spring rate and preload is necessary. In the particular embodiment of the invention described the preload is readily adjusted during manufacture by the method described in GB. 1 488 353.

## Claims

1. A vehicle brake pressure proportioning valve comprising a housing (11) having an inlet port (14) for connection to a driver-controlled source of fluid pressure and an outlet port (23) for connection to rear brakes of the vehicle, a stepped proportioning valve plunger (12, 12C) slidable in a stepped bore (13) in the housing (11) and having one, relatively small, piston area subject to inlet pressure from the inlet port (14) and another, relatively large, piston area subject to brake pressure at the outlet port (23), a loading spring (24) which applies a spring biassing load to the proportioning valve plunger (12, 12C) in a direction opposing movement of the plunger (12, 12C) under the action of brake pressure at the outlet port (23) and metering valve means (26, 27, 28) associated with the proportioning valve plunger (12, 12C) for controlling flow between the inlet port (14) and the outlet port (23), movement of the proportioning valve plunger (12, 12C) against the spring biassing load changing the metering valve means (26, 27, 28) from an open state permitting flow between the inlet port (14) and the outlet port (23) to a closed state preventing flow from the inlet port (14) to the outlet port (23), the metering valve means acting as a non-return valve to allow flow from the outlet port (23) to the inlet port (14), a control mass (36) operative to control flow through a control port (33) between the inlet port (14) and a control chamber (32) by seating on an annular valve seat (35) at one end of the control port (33), a control plunger (29, 29C) movable against a predetermined resilient biassing load by pressure in the control chamber (32) acting on a piston area of the control plunger (29, 29C), and a projection (34) on the control plunger (29, 29C) which extends through the control port (33) and the annular valve seat (35), the control mass (36) having a normal, rest, position in which the control mass (36) is prevented from seating on the annular valve seat (35) by the projection (34), a seated position permitted by the control plunger (29, 29C) having been moved against the resilient biassing load by pressure in the control chamber (32) to allow the control mass (36) to be moved under gravity and seat on the annular valve seat (35) and a disabled position in which the control mass (36) has been moved away from the annular valve seat (35) by vehicle deceleration, characterised in that the control plunger (29, 29C) is situated in the stepped bore (13) and lies adjacent to or is integral with the proportioning valve plunger (12, 12C), and the resilient biassing load is provided by the loading spring (24) acting on the proportioning valve plunger (12, 12C).

2. A proportioning valve according to Claim 1, characterised in that the control plunger (29A) is stepped, being separate from the proportioning valve plunger (12) and presenting a larger piston area to the control chamber (32) than to brake pressure at the outlet port (23).

3. A proportioning valve according to Claim 1, characterised in that the control chamber (32) is connected to the outlet port (23) through a non-return valve which permits flow from the outlet port (23) to the control chamber (32) only.

4. A proportioning valve according to Claim 1, characterised in that the control chamber (32) is connected to a port for connection to a reservoir of fluid at atmospheric pressure, the connecting being through a non-return valve which permits flow from the reservoir to the control chamber (32) only.

## Patentansprüche

1. Fahrzeugbremsdruckbemessungsventil mit einem Gehäuse (11), das eine Einlaßöffnung (14) zur Verbindung mit einer vom Fahrer gesteuerten Fluiddruckquelle und eine Auslaßöffnung (23) zur Verbindung mit den Hinterradbremsen des Fahrzeugs hat, einem abgestuften Bemessungsventilkolben (12, 12C), der in einer abgestuften Bohrung (13) in dem Gehäuse (11) verschiebbar ist und eine verhältnismäßig kleine dem Einlaßdruck von der Einlaßöffnung (14) ausgesetzte Kolbenfläche und eine weitere, verhältnismäßig große dem Bremsdruck an der Auslaßöffnung (23) ausgesetzte Kolbenfläche hat, einer Belastungsfeder (24), die eine Federvorspannkraft auf den Bemessungsventilkolben (12, 12C) in einer der Bewegung des Kolbens (12, 12C) unter der Wirkung des Bremsdruckes an der Auslaßöffnung (23) entgegengesetzten Richtung aufbringt, und einer dem Bemessungsventilkolben (12, 12C) zugeordneten Dosierventileinrichtung (26, 27, 28) zum Steuern der Strömung zwischen der Einlaßöffnung (14) und der Auslaßöffnung (23), wobei eine Bewegung des Bemessungsventilkolbens (12, 12C) gegen die Federvorspannkraft die Dosierventileinrichtung (26, 27, 28) von einer eine Strömung zwischen der Einlaßöffnung (14) und der Auslaßöffnung (23) zulassenden Offenstellung in eine die Strömung von der Einlaßöffnung (14) zu der Auslaßöffnung (23) verhindernden Schließstellung umschaltet, wobei die Dosierventileinrichtung als Rückschlagventil wirkt, um eine Strömung von der Auslaßöffnung (23) zu der Einlaßöffnung (14) zuzulassen, mit einer Steuermasse (36), die betriebsbereit ist, um eine Strömung durch eine Steueröffnung (33) zwischen der Einlaßöffnung (14) und einer Steuerkammer (32) durch Aufsitzen auf einen ringförmigen Ventilsitz (35) an einem Ende der Steueröffnung (33) zu steuern, einem Steuerkolben (29, 29C), der gegen eine vorbestimmte Federvorspannkraft durch Druck in der Steuerkammer (32), der auf eine Kolbenfläche des Steuerkolbens (29, 29C) wirkt, bewegbar ist, und einem Vorsprung (34) an dem Steuerkolben (29, 29C), der sich durch die Steueröffnung (33) und den ringförmigen Ventilsitz (35) hindurch erstreckt, wobei die Steuermasse (36) eine normale Ruhestellung, in welcher die Steuermasse (36) von dem Vorsprung (34) daran gehindert wird, auf den ringförmigen Ventilsitz (35) aufzusitzen, eine von dem Steuerkolben (29, 29C) zugelassene Sitzstellung, der durch den Druck in der Steuerkammer (32) gegen die Federvorspannkraft bewegt wurde, um die Steuermasse (36) unter der Schwerkraft sich bewegen und auf den ringförmigen Ventilsitz (35) aufsitzen zu lassen, und eine unwirksame Stellung hat, in welcher die Steuermasse (36) durch die Fahrzeugverzögerung von dem ringförmigen Ventilsitz wegbewegt wurde, dadurch gekennzeichnet, daß der Steuerkolben (29, 29C) in der abgestuften Bohrung (13) angeordnet ist und angrenzend an den Bemessungsventilkolben (12, 12C) liegt oder mit diesem einteilig ausgeführt ist und die Federvorspannkraft durch die Belastungsfeder (24) bereitgestellt wird, die auf den Bemessungsventilkolben (12, 12C) wirkt.

2. Bemessungsventil nach Anspruch 1, dadurch gekennzeichnet, daß der Steuerkolben (29A) abgestuft, von dem Bemessungsventilkolben (12) getrennt ist und der Steuerkammer (32) eine größere Kolbenfläche als dem Bremsdruck an der Auslaßöffnung (23) darbietet.

3. Bemessungsventil nach Anspruch 1, dadurch gekennzeichnet, daß die Steuerkammer (32) mit der Auslaßöffnung (23) über ein Rückschlagventil verbunden ist, das eine Strömung nur von der Auslaßöffnung (23) zu der Steuerkammer (32) gestattet.

4. Bemessungsventil nach Anspruch 1, dadurch gekennzeichnet, daß die Steuerkammer (32) mit einer Öffnung zur Verbindung mit einem Speicher für Fluid unter Umgebungsdruck verbunden ist, wobei die Verbindung über ein Rückschlagventil erfolgt, das eine Strömung nur von dem Speicher zu der Steuerkammer (32) gestattet.

## Revendications

1. Soupape de réglage proportionnel de la pression pour frein de véhicule, du type comprenant un boîtier (11) qui présente un orifice d'entrée (14) destiné à être relié à une source de pression de fluide commandée par le conducteur et un orifice de sortie (23) destiné à être relié aux freins arrière du véhicule, un piston de soupape de réglage proportionnel étagé (12, 12C) qui peut coulisser dans un alésage étagé (13) du boîtier (11) et présente une première surface de piston relativement faible qui est soumise à la pression d'entrée provenant de l'orifice d'entrée (14), et une autre surface de piston relativement grande qui est soumise à la pression des freins à l'orifice de sortie (23), un ressort de charge (24) qui applique un effort de sollicitation élastique audit piston (12, 12C) suivant une direction qui est opposée au mouvement que subit ce piston (12, 12C) sous l'effet de la pression des freins à l'orifice de sortie (23), et une soupape de dosage (26, 27, 28) qui est associée audit piston (12, 12C) de manière à commander le débit entre l'orifice d'entrée (14) et l'orifice de sortie (23), le mouvement du piston (12, 12C) de la soupape de réglage proportionnel à l'encontre de l'effort de sollicitation élastique faisant passer cette soupape de dosage (26, 27, 28) de l'état ouvert où elle permet l'écoulement entre l'orifice d'entrée (14) et l'orifice de sortie (23), à l'état fermé où elle s'oppose à ce même écoulement, cette même soupape de dosage servant de soupape anti-retour pour permettre l'écoulement de l'orifice de sortie (23) vers l'orifice d'entrée (14), une masse de commande (36) qui sert à commander l'écoulement à travers un orifice de commande (33) situé entre l'orifice d'entrée (14) et une chambre de commande (32) en venant s'appuyer sur un siège annulaire de soupape (35) disposé à une extrémité de cet orifice de commande (33), un piston de commande (29, 29C) qui est mobile à l'encontre d'un effort de sollicitation élastique pré-établi sous l'effet de la pression qui règne dans la chambre de commande (32) et agit sur une surface de piston de ce même piston de commande (29, 29C), et une saillie (34) qui est prévue sur ce piston de commande (29, 29C) et s'étend à travers l'orifice de commande (33) et le siège annulaire de soupape (35), la masse de commande (36) présentant une position de repos, normale, dans laquelle cette masse de commande se trouve empêchée par la saillie (34) de s'appuyer sur le siège annulaire de soupape (35), une position calée sur son siège qui est permise par le fait que le piston de commande (29, 29C) s'est déplacé à l'encontre de l'effort de sollicitation élastique sous l'effet de la pression régnant dans la chambre de commande (32), permettant ainsi à la masse de commande (36) de se déplacer sous l'effet de la pesanteur et de s'appuyer sur le siège annulaire de soupape (35), et une position hors service dans laquelle cette masse de commande (36) s'est écartée du siège annulaire de soupape (35) sous l'effet du ralentissement du véhicule, caractérisée en ce que le piston de commande (29, 29C) se trouve situé dans l'alésage étagé (13) et se trouve disposé de manière adjacente au piston de soupape de réglage proportionnel (12, 12C) ou est venu de matière avec lui, et en ce que l'effort de sollicitation élastique est fourni par le ressort de charge (24) qui agit sur ce piston de soupape de réglage proportionnel (12, 12C).

2. Soupape de réglage proportionnel suivant la revendication 1, caractérisée en ce que le piston de commande (29A) est un piston étagé et est distinct du piston de soupape de réglage proportionnel (12), et présente à la chambre de commande (32) une surface de piston plus grande qu'à la pression des freins à l'orifice de sortie (23).

3. Soupape de réglage proportionnel suivant la revendication 1, caractérisée en ce que la chambre de commande (32) communique avec l'orifice de sortie (23) par l'intermédiaire d'une soupape anti-retour qui ne permet un écoulement que de cet orifice de sortie (23) vers cette chambre de commande (32).

4. Soupape de réglage proportionnel suivant la revendication 1, caractérisée en ce que la chambre de commande (32) communique avec un orifice permettant sa liaison avec un réservoir de fluide se trouvant sous la pression atmosphérique, cette liaison se faisant par l'intermédiaire d'une soupape anti-retour qui ne permet d'écoulement que de ce réservoir vers cette chambre de commande (32).

FIG.1.

FIG. 2.

FIG. 4.

FIG. 3.

FIG. 5.